# EUROPEAN PATENT SPECIFICATION

(11) **EP 2 346 436 B1**
(45) Date of publication and mention of the grant of the patent: **26.06.2013**
(21) Application number: 09760309.6
(22) Date of filing: 13.11.2009
(51) Int. Cl.: A61C 17/02

(54) **NOZZLE ASSEMBLY FOR LIQUID DROPLET BASED INTERPROXIMAL CLEANER**
DÜSENANORDNUNG FÜR EIN INTERPROXIMALES REINIGUNGSMITTEL AUF FLÜSSIGTRÖPFCHEN-BASIS
ENSEMBLE PULVÉRISATEUR POUR APPAREIL DE NETTOYAGE INTERPROXIMAL PAR GOUTTELETTES DE LIQUIDE

(30) Priority: 17.11.2008 US 115186 P
(43) Date of publication of application: 27.07.2011
(73) Proprietor: Koninklijke Philips Electronics N.V., 5621 BA Eindhoven (NL)
(72) Inventor: JANSSEN, Jozef Johannes Maria, NL-5656 AE Eindhoven (NL); GOTTENBOS, Bart, NL-5656 AE Eindhoven (NL)
(74) Representative: Coops, Peter
(86) International application number: PCT/IB2009/054830
(87) International publication number: WO 2010/055434

(56) References cited:
- WO-A2-2008/012707
- US-A- 4 149 315
- US-A1- 2003 027 100

## Description

This invention relates generally to liquid droplet interproximal cleaning devices, and more specifically concerns an assembly for injecting liquid into a gas stream to produce the liquid droplets.

The use of gas assisted devices to produce a stream of liquid droplets for use in oral care, i.e. teeth cleaning, is generally known such as from WO 2008/012707. Such devices are particularly effective for interproximal, i.e. interdental, cleaning as an alternative to flossing, which is problematic for many users. In operation of such devices, however, the breakup of a fluid stream into droplets by interaction with the gas stream is often chaotic and difficult to fully predict and control. Further, there is typically significant energy loss in the system due to inefficiencies in transporting the fluid droplets by the gas stream from their point of generation to the outlet/orifice of the nozzle portion of the device. The volume of gas required for droplet transportation increases the total amount of gas needed, without that volume of gas contributing directly to the effectiveness of droplet cleaning, thereby reducing the usage time of the device for a given amount of gas.

Hence, it is desirable to have a more efficient and effective system for producing fluid droplets using a gas stream.

Accordingly, an oral care cleaning apparatus for cleaning teeth using liquid droplets is disclosed herein, comprising: a reservoir of compressed gas; a reservoir of liquid; a gas chamber and a one-way metered valve for selectively permitting a selected amount of gas into the gas chamber from the gas reservoir; a liquid chamber to which an amount of liquid is moved; a one-way valve connecting the gas chamber and the liquid chamber, such that when the gas in the gas chamber, expanding as it leaves the metered valve, reaches a certain pressure, the one-way connecting valve opens, permitting a small amount of gas into the liquid chamber to move the liquid therein along a liquid connecting line from the liquid chamber; and a gas line extending from the gas chamber, terminating in an exit orifice, wherein the liquid connecting line connects with the gas line prior to the exit orifice, resulting in a stream of liquid droplets when the liquid encounters the stream of gas, the resulting droplets exiting from the gas line at the exit orifice.

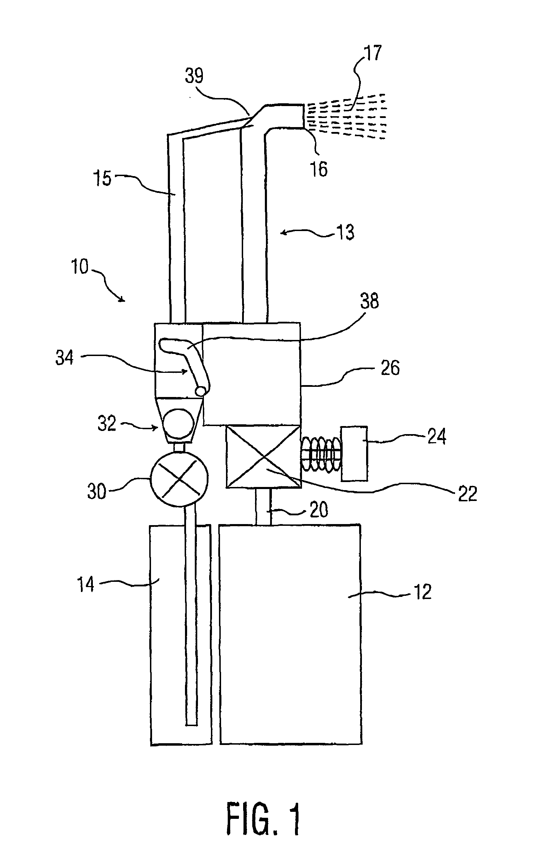

The drawing is a schematic view of an interproximal cleaning appliance including a nozzle assembly which is the subject of this application.

The figure shows a fluid droplet interproximal teeth cleaning appliance/apparatus, generally at 10. The appliance includes a gas reservoir 12 which can contain compressed gas such as CO₂ or other gas. The compressed gas in reservoir 12 could also be in a liquid state or a combination of liquid or gas. The reservoir is typically in the form of a replaceable cartridge. The teeth cleaning appliance 10 also includes a liquid reservoir 14 which can contain water or other liquid, including mouthwash or other oral treatment solutions. In general operation, a high velocity gas stream present in a gas stream line 13 (produced as described below) interacts with fluid present in liquid line 15 to produce a spray of liquid droplets 17 which exit the apparatus at a nozzle orifice 16, directed toward the interproximal or other areas of the teeth for cleaning. The user positions the nozzle orifice within the mouth such that the liquid droplets impact the desired area of the teeth. Generally, the liquid droplets will be traveling at a velocity in the range of 60 m/s as they exit from the orifice 16, and with a size in the range of 0.1 to 50 microns.

In more detail, extending from gas reservoir 12 is a small connecting line 20 which connects to a metering valve 22 which is controlled by a user-operated button or similar element 24. The metering valve holds a volume of gas for a single use. The gas exiting from metering valve 22 as it expands is directed to a gas chamber 26. Typically, in the embodiment shown, each operation of button 24 by an operator will produce a burst of gas with a volume of approximately 10 ml, although this amount can vary.

Liquid in reservoir 14 is moved by a pump 30 through a one-way valve 32 to a liquid chamber 34. Liquid pump 30 can be operated separately by a user, independently of the release of gas, or the pump can be connected to be responsive to the operation of button 24 by a user as well, i. e. gas can be moved into chamber 26 and fluid can be pumped into liquid chamber 34 by a user's single action. A single use of liquid is approximately 0.1 ml.

As indicated above, gas from reservoir 12 will expand as it moves into metering valve 22 and then chamber 26. The expanding gas will produce a pressure in chamber 26. The expanding gas will produce increased pressure in chamber 26. The increasing pressure will open a one-way valve 38 which connects gas chamber 26 and liquid chamber 34. In the embodiment shown, this pressure will be about 10 bar. A small amount of gas (approximately 1%) in gas chamber 26 will move through valve 38 into liquid chamber 34, forcing liquid therein through liquid connecting line 15 to a connecting point 39 with gas stream line 13. Typically, the liquid line will have an internal diameter of 250 µm to 1 mm, while the gas line will have a diameter of approximately 2 mm.

The remainder of the gas in gas chamber 26 from the single use of gas produced by activation of button 24 will stream from chamber 26 through gas stream line 13, which terminates at exit orifice 16. The pressure in the gas stream is typically approximately 10 bar, with a gas velocity in the range of 100-300 m/s. In the embodiment shown, liquid connecting line 15 will meet with gas line 13 at point 39 near nozzle exit orifice 16, typically 1-10 mm away from the orifice.

The moving liquid will intersect the gas stream in line 13, resulting in the generation of liquid droplets in conventional fashion. The resulting droplets will then exit through orifice 16, directed to the dental regions for cleaning. As indicated above, the speed of the droplets typically will be in the range of 60 m/s when they exit orifice 16.

The advantage to the above system is that nearly all the gas in chamber 26 is used to produce the liquid droplets, when liquid in line 15 intersects the gas stream in line 13, with resulting improved efficiency. Since the liquid line connects with the gas line close to the nozzle exit, it is not necessary for the gas stream to transport the liquid droplets for an extended distance. In the embodiment shown, the gas chamber and the liquid chamber with the connecting one-way value are located in what can be referred to as a nozzle portion of the apparatus. However, these members can be located further to the rear of the apparatus, such as in the handle.

Accordingly, a new nozzle system is disclosed which utilizes a small portion of a high pressure gas stream to pressurize a liquid chamber to force liquid therein along a connecting line to a point near the nozzle orifice where it intercepts the gas stream, which is moving at a high velocity, to produce fine liquid droplets for dental cleaning, particularly interproximal cleaning.

## Claims

1. An oral care cleaning apparatus for cleaning teeth using liquid droplets, comprising:
a reservoir of compressed gas (12);
a reservoir of liquid (14);
a gas chamber (26) and a one-way metered valve (20) for selectively permitting a selected amount of gas into the gas chamber from the gas reservoir;
a liquid chamber (34) to which an amount of liquid is moved;
a one-way valve (38) connecting the gas chamber and the liquid chamber, such that when the gas in the gas chamber, expanding as it leaves the metered valve, reaches a certain pressure, the one-way connecting valve opens, permitting a small amount of gas into the liquid chamber to move the liquid therein along a connecting line (15) from the liquid chamber; and
a gas line (13) extending from the gas chamber, terminating in an exit orifice (16), wherein the connecting line connects with the gas line prior to the exit orifice, resulting in a stream of liquid droplets when the liquid encounters the stream of gas, the resulting droplets exiting from the gas line at the exit orifice.

2. The oral care apparatus of claim 1, wherein connection between the liquid line and the gas line is within the range of 1-10 mm from the exit orifice.

3. The oral care apparatus of claim 1, wherein the gas in the gas reservoir is in a gaseous state.

4. The oral care apparatus of claim 1, wherein the gas in the gas reservoir is in a liquid state or a combination of liquid and gas.

5. The oral care apparatus of claim 1, wherein the metered valve receives a defined volume of gas upon operation thereof by a user.

6. The oral care apparatus of claim 5, wherein the defined volume of gas is approximately 10 ml from the exit orifice.

7. The oral care apparatus of claim 1, including a pump (30) and a one-way valve (32) between the liquid reservoir and the liquid chamber, wherein operation of the pump results in a single use volume of liquid being moved into the liquid chamber.

8. The oral care apparatus of claim 7, including a control member (24) which when operated permits gas to move into the metered valve and then into the gas chamber and also results in liquid being pumped into the liquid chamber.

9. The oral care apparatus of claim 1, wherein the amount of gas directed into the liquid chamber to move the liquid through the liquid connecting line for a single use of the apparatus is in the range of 1% of the gas present in the gas chamber.

10. The oral care apparatus of claim 1, wherein the amount of gas for a single use is approximately 10 ml, and wherein the amount of liquid for a single use is approximately 0.1 ml.

## Patentansprüche

1. Mundpflegegerät zum Reinigen der Zähne unter Verwendung von Flüssigkeitströpfchen, das Folgendes umfasst:
einen Tank mit Druckgas (12),
einen Tank mit Flüssigkeit (14),
eine Gaskammer (26) und ein Einweg-Dosierventil (20), das selektiv eine ausgewählte Menge Gas aus dem Gastank in die Gaskammer strömen lässt,
eine Flüssigkeitskammer (34), in die eine Menge Flüssigkeit bewegt wird,
ein Einwegventil (38), das die Gaskammer und die Flüssigkeitskammer derart verbindet, dass das Einweg-Verbindungsventil, wenn das Gas in der Gaskammer, das sich bei Verlassen des Dosierventils ausdehnt, einen gewissen Druck erreicht hat, öffnet, so dass eine kleine Menge Gas in die Flüssigkeitskammer strömen kann und die darin enthaltene Flüssigkeit von der Flüssigkeitskammer in eine Verbindungsleitung (15) bewegt, und
eine Gasleitung (13), die von der Gaskammer ausgeht und an einer Austrittsöffnung (16) endet, wobei die Verbindungsleitung vor der Austrittsöffnung eine Verbindung mit der Gasleitung aufweist, so dass ein Strom mit Flüssigkeitströpfchen entsteht, wenn die Flüssigkeit auf den Gasstrom trifft, wobei die entstehenden Tröpfchen die Gasleitung an der Austrittsöffnung verlassen.

2. Mundpflegegerät nach Anspruch 1, wobei die Verbindung zwischen der Flüssigkeitsleitung und der Gasleitung im Bereich von 1 - 10 mm von der Austrittsöffnung entfernt ist.

3. Mundpflegegerät nach Anspruch 1, wobei sich das Gas in dem Gastank in einem gasförmigen Zustand befindet.

4. Mundpflegegerät nach Anspruch 1, wobei sich das Gas in dem Gastank in einem flüssigen Zustand befindet oder eine Kombination aus Flüssigkeit und Gas ist.

5. Mundpflegegerät nach Anspruch 1, wobei das Dosierventil bei Betätigung durch einen Benutzer eine bestimmte Menge Gas erhält.

6. Mundpflegegerät nach Anspruch 5, wobei die bestimmte Menge Gas aus der Austrittsöffnung ungefähr 10 ml beträgt.

7. Mundpflegegerät nach Anspruch 1, das eine Pumpe (30) und ein Einwegventil (32) zwischen dem Flüssigkeitstank und der Flüssigkeitskammer umfasst, wobei die Betätigung der Pumpe bewirkt, dass eine Menge Flüssigkeit für eine einzelne Anwendung in die Flüssigkeitskammer bewegt wird.

8. Mundpflegegerät nach Anspruch 7, das ein Stellglied (24) umfasst, das bei Betätigung Gas in das Dosierventil und anschließend in die Gaskammer strömen lässt und ferner bewirkt, dass Flüssigkeit in die Flüssigkeitskammer gepumpt wird.

9. Mundpflegegerät nach Anspruch 1, wobei die Menge Gas, die in die Flüssigkeitskammer geleitet wird, um die Flüssigkeit durch die Flüssigkeitsverbindungsleitung für eine einzelne Anwendung des Gerätes zu bewegen, im Bereich von 1% des in der Gaskammer vorhandenen Gases liegt.

10. Mundpflegegerät nach Anspruch 1, wobei die Menge Gas für eine einzelne Anwendung ungefähr 10 ml beträgt und wobei die Menge Flüssigkeit für eine einzelne Anwendung ungefähr 0,1 ml beträgt.

## Revendications

1. Appareil de nettoyage pour soin buccal afin de nettoyer les dents en utilisant des gouttelettes de liquide, comprenant :
un réservoir de gaz comprimé (12) ;
un réservoir de liquide (14) ;
une chambre à gaz (26) et une soupape de dosage unidirectionnelle (20) pour permettre de faire entrer sélectivement une quantité de gaz sélectionnée dans la chambre à gaz depuis le réservoir de gaz ;
une chambre à liquide (34) à laquelle une quantité de liquide est transférée ;
une soupape unidirectionnelle (38) reliant la chambre à gaz et la chambre à liquide, de sorte que lorsque le gaz dans la chambre à gaz, en se dilatant quand il quitte la soupape de dosage, atteint une certaine pression, la soupape de connexion unidirectionnelle s'ouvre, permettant à une petite quantité de gaz d'entrer dans la chambre à liquide, afin de déplacer le liquide à l'intérieur, le long d'une ligne de raccordement (15) depuis la chambre à liquide ; et
une ligne de gaz (13) s'étendant de la chambre à gaz, se terminant par un orifice de sortie (16), dans laquelle la ligne de raccordement se connecte à la ligne de gaz avant l'orifice de sortie, en provoquant un courant de gouttelettes de liquides quand le liquide rencontre le courant de gaz, les gouttelettes en résultant sortant de la ligne de gaz au niveau de l'orifice de sortie.

2. Appareil de soin buccal selon la revendication 1, dans lequel la connexion entre la ligne de liquide et la ligne de gaz est dans la gamme de 1-10 mm de l'orifice de sortie.

3. Appareil de soin buccal selon la revendication 1, dans lequel le gaz dans le réservoir de gaz est à l'état gazeux.

4. Appareil de soin buccal selon la revendication 1, dans lequel le gaz dans le réservoir de gaz est à l'état liquide ou une combinaison de liquide ou de gaz.

5. Appareil de soin buccal selon la revendication 1, dans lequel la soupape de dosage reçoit un volume défini de gaz, lorsqu'elle est actionnée par un utilisateur.

6. Appareil de soin buccal selon la revendication 5, dans lequel le volume de gaz défini est d'approximativement 10 ml.

7. Appareil de soin buccal selon la revendication 1, comprenant une pompe (30) et une soupape unidirectionnelle (32) entre le réservoir de liquide et la chambre à liquide, dans lequel le fonctionnement de la pompe provoque un déplacement d'un volume de liquide à usage unique dans la chambre à liquide.

8. Appareil de soin buccal selon la revendication 7, comprenant un élément de contrôle (24) qui, lorsqu'il est actionné, permet au gaz de se déplacer dans la soupape de dosage, puis dans la chambre à gaz et provoque également le pompage de liquide dans la chambre à liquide.

9. Appareil de soin buccal selon la revendication 1, dans lequel la quantité de gaz dirigée dans la chambre à liquide, afin de déplacer le liquide à travers la ligne de raccordement de liquide, pour une utilisation unique de l'appareil est dans la gamme de 1% du gaz présent dans la chambre à gaz.

10. Appareil de soin buccal selon la revendication 1, dans lequel la quantité de gaz pour une utilisation unique est d'approximativement 10 ml, et dans lequel la quantité de liquide pour une utilisation unique est d'approximativement 0,1 ml.
